# EUROPÄISCHE PATENTSCHRIFT

(11) **EP 1 146 261 B1**
(45) Veröffentlichungstag und Bekanntmachung des Hinweises auf die Patenterteilung: **03.12.2003**
(21) Anmeldenummer: 01108373.0
(22) Anmeldetag: 03.04.2001
(51) Int. Cl.: F16J 15/08, B23K 11/00

(54) **Zylinderkopfdichtung und Verfahren zu ihrer Herstellung**
Cylinder head gasket and fabrication method therefor
Joint de culasse et sa méthode de fabrication

(30) Priorität: 13.04.2000 DE 10018290
(43) Veröffentlichungstag der Anmeldung: 17.10.2001
(73) Patentinhaber: ElringKlinger AG, 72581 Dettingen (DE)
(72) Erfinder: Bleyh, Fritz, 72581 Dettingen (DE)
(74) Vertreter: Hoeger, Stellrecht & Partner

(56) Entgegenhaltungen:
- DE-A- 19 606 382

## Beschreibung

Die Erfindung betrifft eine Zylinderkopfdichtung mit einer mehrere Metallblechlagen aufweisenden Dichtungsplatte, welche mindestens eine Brennraum-Durchgangsöffnung besitzt und bei der eine erste Metallblechlage mit einem ringförmigen, die Brennraum-Durchgangsöffnung umfassenden, in Richtung auf eine benachbarte, zweite Metallblechlage vorspringenden und mindestens bei eingebauter Zylinderkopfdichtung gegen die zweite Metallblechlage anliegenden, senkrecht zur Dichtungsplatte elastisch verformbaren Dichtelement versehen ist, und wobei zur Begrenzung der Verformung des Dichtelements dem letzteren radial benachbart auf einer der beiden Metallblechlagen ein der anderen Metallblechlage zugewandter, die Brennraum-Durchgangsöffnung umfassender und von den beiden Metallblechlagen überdeckter metallischer Distanzhalterring befestigt ist, und zwar mittels einer ringförmigen Schweißnaht. Bei dem Dichtelement handelt es sich insbesondere um eine Sicke, die die Gestalt einer im Querschnitt ungefähr kreisbogenförmigen sogenannten Vollsicke oder einer sogenannten Halbsicke haben kann - der Querschnitt einer Halbsicke hat ungefähr die Form einer Stufe oder eines nahezu flachgezogenen Z. Grundsätzlich sind aber auch andere als sickenförmige Dichtelemente denkbar, welche sich beim Einspannen der Zylinderkopfdichtung und im Motorbetrieb senkrecht zur Ebene der Dichtungsplatte elastisch verformen. Erwähnt sei noch, daß die oben erwähnten Distanzhalter häufig auch als Stopper bezeichnet werden.

Ferner betrifft die Erfindung ein Verfahren zur Herstellung einer solchen Zylinderkopfdichtung, und zwar ein Verfahren zur Herstellung der Schweißnaht, durch die der Distanzhalterring mit der ihn tragenden Metallblechlage verbunden ist.

Aus der EP-0 486 817-B1 ergibt sich eine Zylinderkopfdichtung mit einer von einer Metallblechlage gebildeten Dichtungsplatte und einem auf dieser Metallblechlage durch Laser-Punktschweißen befestigten Metallblech-Dichtring, der eine Brennraum-Durchgangsöffnung der Metallblechlage unmittelbar umgibt sowie der Begrenzung der elastischen Verformung einer Sicke (insbesondere beim Anziehen der Zylinderkopfschrauben) dient, welche in der die Dichtungsplatte bildenden Metallblechlage ausgebildet ist, die Brennraum-Durchgangsöffnung und den Dichtring ringförmig umschließt sowie eine Höhe hat, welche etwas größer ist als die Dicke des Dichtrings. Die der Befestigung des Dichtrings an der die Dichtungsplatte bildenden Metallage dienenden Schweißpunkte sind dabei so ausgebildet und angeordnet, daß ihr Durchmesser etwas größer ist als ihr in Umfangsrichtung des Dichtrings gemessener Mittenabstand, so daß sich einander benachbarte Schweißpunkte überlappen. Der Laserstrahl wird dabei auf die obere Seite, d. h. die Sichtseite des Dichtrings gerichtet, so daß die gegen den Zylinderkopf (oder gegebenenfalls gegen den Motorblock) anliegende Ringfläche des Dichtrings eine schuppenartige Oberflächenstruktur aufweist.

Eine solche, aus einer Serie von Schweißpunkten bestehende Schweißnaht hat eine ganze Reihe von Nachteilen: Zum einen ist nicht gewährleistet, daß die Verbindung zwischen dem Metallblech-Dichtring und der ihn tragenden Metallblechlage wirklich gasdicht ist, und zum anderen kann sich die erwähnte schuppenartige Oberflächenstruktur der Schweißnaht nachteilig auswirken: Aufgrund der Motordynamik wird eine Sicke im Motorbetrieb periodisch elastisch abgeflacht und erhöht sich dann wieder, und dieses Arbeiten der Sicke führt zwangsläufig zu einer oszillierenden, bezüglich der Brennraumachse radialen Schiebebewegung zwischen dem in Rede stehenden Metallblechring und derjenigen Fläche, gegen die sich der Metallblechring im Motorbetrieb abstützt; die rauhe Oberseite des Metallblechrings führt dann zu dem Risiko, daß der Metallblechring zerstört oder von der ihn tragenden Metallblechlage gelöst wird, und wenn Teile des Metallblechrings in den Brennraum fallen, kann dies zur Zerstörung des Motors führen.

Aus der WO 97/31204 der Firma Elring Klinger GmbH sind Zylinderkopfdichtungen der eingangs erwähnten Art bekannt, bei denen der Distanzhalterring unter Verwendung eines Dauerstrichlasers an der den Distanzhalterring tragenden Metallblechlage durch eine kontinuierliche, ringförmige und in sich geschlossene, bis auf einen Überlappungsbereich gleichförmige Laserschweißnaht gasdicht befestigt ist. In dem erwähnten Überlappungsbereich liegen Anfangs- und Endbereich der Schweißnaht in der Draufsicht auf den Distanzhalterring nebeneinander oder fallen nahezu zusammen. Mit einer solchen Laserschweißnaht lassen sich die vorstehend beschriebenen Nachteile des sich aus der EP-0 486 817-B1 ergebenden Laserpunktschweißens vermeiden. Andererseits ist das Herstellen der kontinuierlichen Schweißnaht mittels eines Dauerstrichlasers verhältnismäßig aufwendig, und zwar nicht nur im Hinblick auf die hierfür erforderlichen Einrichtungen, sondern auch wegen der durch die Dauer des Schweißvorgangs bedingten, verhältnismäßig großen Taktzeit bei der Serienherstellung der in Rede stehenden Zylinderkopfdichtungen.

Der Erfindung lag nun die Aufgabe zugrunde, eine Zylinderkopfdichtung der eingangs erwähnten Art zu schaffen und ein Verfahren zu ihrer Herstellung anzugeben, welche bzw. welches es ermöglicht, zumindest den Zeitaufwand für die Herstellung einer gasdichten, den Distanzhalterring mit der ihn tragenden Metallblechlage verbindenden Schweißnaht zu minimieren.

Diese Aufgabe läßt sich erfindungsgemäß dadurch lösen, daß der Distanzhalterring an der ihn tragenden Metallblechlage durch eine kontinuierliche, ringförmige, gleichförmige und in sich geschlossene Schweißnaht durch Elektroimpulsschweißen gasdicht befestigt wird, indem der Distanzhalterring und die ihn tragende Metallblechlage zwischen einer gegen den Distanzhalterring anliegenden ersten Elektrode und einer Gegenelektrode eingespannt und sodann ein für das Verschweißen ausreichender Stromimpuls durch einen gegen den Distanzhalterring gepreßten ringförmigen, schneiden- oder wulstartigen Kontaktvorsprung der ersten Elektrode, den Distanzhalterring, die diesen tragende Metallblechlage und die Gegenelektrode geleitet wird. Dabei können der Distanzhalterring und die ihn tragende Metallblechlage nur zwischen dem Kontaktvorsprung der ersten Elektrode und der Gegenelektrode eingespannt werden.

Eine auf diese Weise hergestellte erfindungsgemäße Zylinderkopfdichtung zeichnet sich dann dadurch aus, daß der Distanzhalterring an der ihn tragenden Metallblechlage durch eine kontinuierliche, ringförmige, gleichförmige und in sich geschlossene Elektroschweißnaht gasdicht befestigt ist, welche auf der freien Seite des Distanzhalterrings eine ringförmige, rillenartige Vertiefung aufweist, die in ihrer Form ungefähr dem Kontaktvorsprung der ersten Elektrode entspricht.

Das Elektroimpulsschweißen mittels eines ringförmigen, schneiden- oder wulstartigen Kontaktvorsprungs einer Elektrode ermöglicht sehr kurze Taktzeiten (es können bis zu 60 oder mehr Schweißnähte pro Minute erzeugt werden), da die im Schweißgerät üblicherweise kapazitiv gespeicherte Schweißenergie in einen nur einige Millisekunden andauernden, ausreichend hohen und durch den Kontaktvorsprung konzentrierten Schweißstrom umgesetzt werden kann, wobei ein einziger Stromimpuls für das Verschweißen ausreicht. Exemplarisch sind Stromstöße mit einer Dauer von nur 12 bis 15 Millisekunden. Außerdem ermöglichen es die auf dem Markt befindlichen Elektroimpulsschweißgeräte, die Schweißenergie mittels einer Regel- und Steuerelektronik stufenlos einzustellen und auch stets zu überwachen.

Obwohl es zu bevorzugen ist, die eine Elektrode mit dem schneiden- oder wulstartigen Kontaktvorsprung gegen den Distanzhalterring anzupressen und die Gegenelektrode mit einer ebenen Stirnfläche gegen die den Distanzhalterring tragende Metallblechlage anzupressen, ist es grundsätzlich auch denkbar, die eine Elektrode mit dem schneiden- oder wulstartigen Kontaktvorsprung gegen die den Distanzhalterring tragende Metallblechlage anzupressen oder beide Elektroden mit ringförmigen, schneiden- oder wulstartigen Kontaktvorsprüngen zu versehen, welche beim Schweißen einander gegenüberliegen, so daß sich ein möglichst kurzer Strompfad des Schweißstromes durch den Distanzhalterring und die Metallblechlage ergibt und die Kontaktvorsprünge eine noch stärkere Konzentrierung des Schweißstromes bewirken.

Grundsätzlich ist es möglich, einen Distanzhalterring als solchen mit der ihn tragenden Metallblechlage zu verschweißen; vor allem aufgrund des Umstands, daß die Breite solcher Distanzhalterringe verhältnismäßig gering ist, was auch deren Handhabung erschwert, empfiehlt sich jedoch eine andere Vorgehensweise: Da solche Distanzhalterringe ohnehin aus einer Metallblechlage ausgestanzt werden müssen, kann man auch eine Metallblechscheibe, deren Außendurchmesser dem Außendurchmesser des späteren Distanzhalterrings entspricht, mit der für das Tragen des Distanzhalterrings vorgesehenen Metallblechlage verschweißen und sodann zur Erzeugung des Distanzhalterrings aus der Scheibe eine Öffnung ausstanzen.

Weitere vorteilhafte Ausführungsformen der Erfindung ergeben sich aus den beigefügten Ansprüchen und/oder aus der nachfolgenden Beschreibung sowie der beigefügten zeichnerischen Darstellung einer bevorzugten Ausführungsform einer erfindungsgemäßen Zylinderkopfdichtung und eines Schweißwerkzeugs für das Anschweißen von Distanzhalterringen; in der Zeichnung zeigen:
- Fig. 1: eine Draufsicht auf einen Teil der Zylinderkopfdichtung;
- Fig. 2: einen Schnitt durch einen Randbereich dieser Zylinderkopfdichtung entsprechend der Linie 2-2 in Fig. 1;
- Fig. 3: einen Schnitt durch einen zwischen zwei Brennraum-Durchgangsöffnungen liegenden Stegbereich der Zylinderkopfdichtung entsprechend der Linie 3-3 in Fig. 1;
- Fig. 4: einen Ausschnitt aus dem linken Teil der Fig. 2 in größerem Maßstab, und
- Fig. 5: einen Schnitt durch das Schweißwerkzeug.

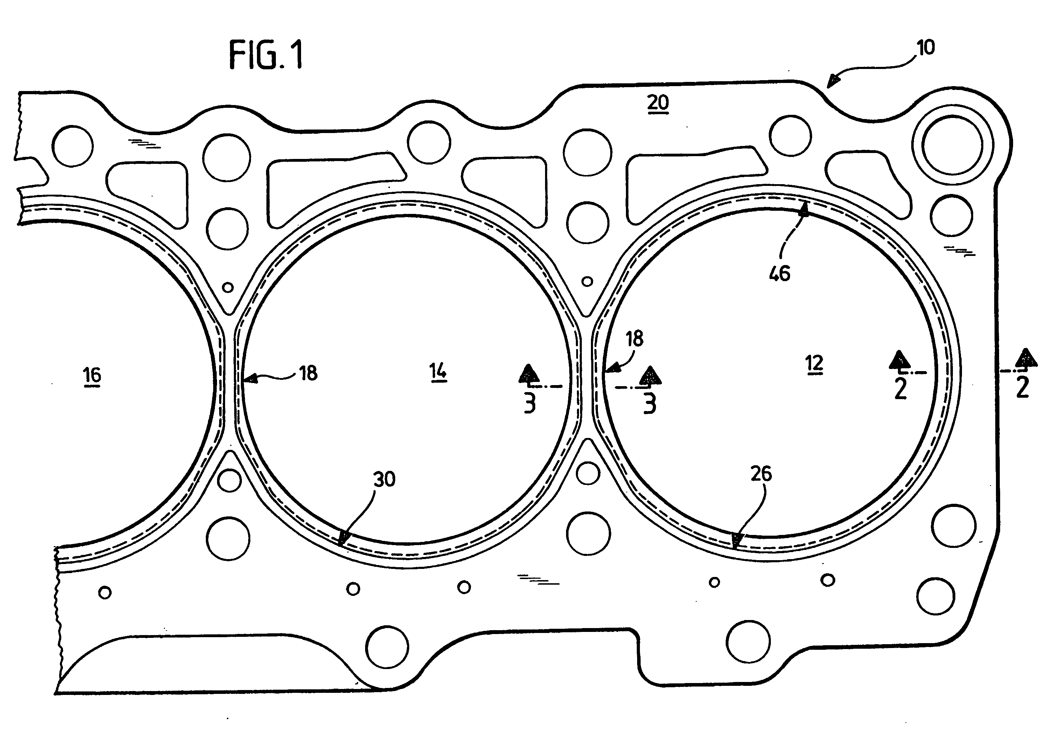

Die in Fig. 1 dargestellte erfindungsgemäße Zylinderkopfdichtung besitzt eine Dichtungsplatte 10, in der sich nebeneinander mehrere Brennraum-Durchgangsöffnungen befinden, von denen nur die Öffnungen 12 und 14 ganz und die benachbarte Öffnung 16 teilweise dargestellt sind. Zwischen einander benachbarten Brennraum-Durchgangsöffnungen bildet die Dichtungsplatte 10 verhältnismäßig schmale Stegbereiche 18. Im übrigen soll die Zylinderkopfdichtung nicht weiter beschrieben werden, da dies für das Verständnis der vorliegenden Erfindung nicht erforderlich ist.

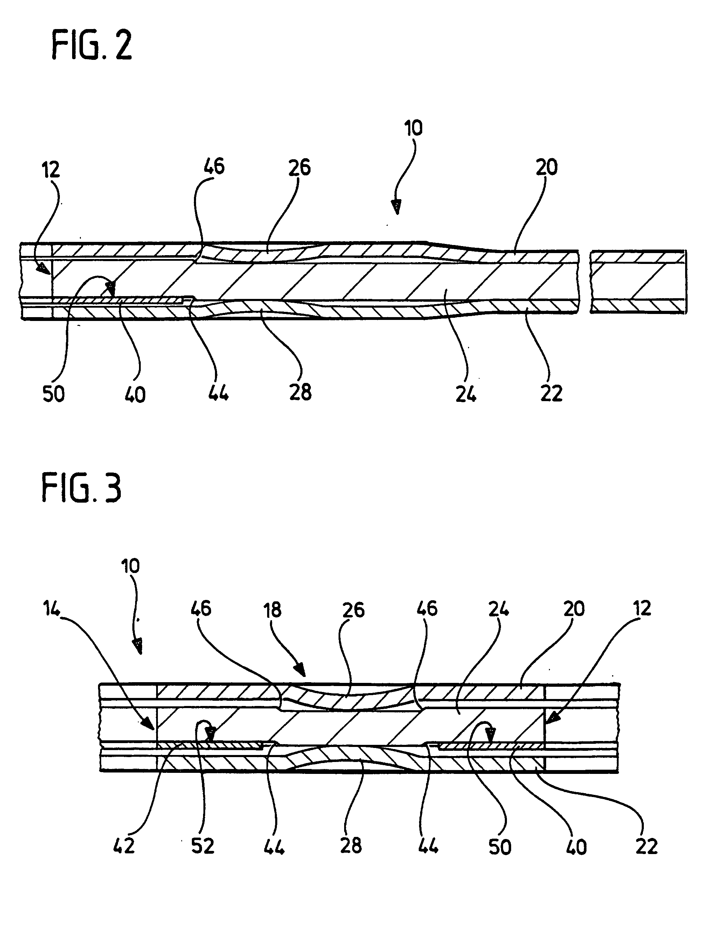

In den Figuren 2 und 3 wurden die Ränder der Brennraum-Durchgangsöffnungen mit den in Fig. 1 für diese Öffnungen verwendeten Bezugszeichen versehen, und da die Fig. 3 einen Schnitt durch den einen Stegbereich 18 darstellt, wurde auch dieses Bezugszeichen in die Fig. 3 eingetragen.

Wie sich aus den Figuren 2 und 3 ergibt, besitzt die gezeichnete Ausführungsform der erfindungsgemäßen Zylinderkopfdichtung eine Dichtungsplatte, welche im wesentlichen aus drei Metallblechlagen besteht, nämlich aus zwei Außenlagen 20 und 22 und einer zwischen den beiden Außenlagen angeordneten Mittellage 24, wobei die Blechstärke der letzteren sehr viel größer ist als diejenige der Außenlagen 20, 22.

Jede der Brennraum-Durchgangsöffnungen der erfindungsgemäßen Zylinderkopfdichtung wird vollständig von Dichtelementen umgeben, welche bei der dargestellten Ausführungsform die Gestalt von Sicken haben, die durch Prägevorgänge in den Außenlagen 20 und 22 erzeugt wurden. Die die Brennraum-Durchgangsöffnung 12 umgebenden Sicken wurden mit 26 und 28 bezeichnet, ihr Querschnitt ist kreisbogenförmig, sie springen in Richtung auf die Mittellage 24 vor und liegen mit ihren Kuppen gegen die Mittellage 24 an, und zwar nicht nur bei in einen Motor eingebauter Zylinderkopfdichtung, sondern schon in der fertigen Zylinderkopfdichtung vor deren Einbau. Die Metallblechlagen 20, 22 und 24 sind an gewissen Stellen der Dichtungsplatte 10 fest miteinander verbunden, so z. B. in dem in Fig. 2 rechts dargestellten Randbereich der Dichtungsplatte.

In die Fig. 1 wurde das Bezugszeichen 26 für die die Brennraum-Durchgangsöffnung 12 umgebende Sicke eingetragen, ebenso das Bezugszeichen 30 für eine in der Außenlage 20 erzeugte und die Brennraum-Durchgangsöffnung 14 umgebende Sicke. Wie nun die Fig. 1 in Verbindung mit der Fig. 3 erkennen läßt, bedingt der schmale Stegbereich 18 zwischen den Durchgangsöffnungen 12 und 14, daß in diesem Stegbereich die Sicken 26 und 30 zusammenfallen, d. h. ineinanderlaufen, und gleiches gilt für die in der Außenlage 22 erzeugten Sicken; deshalb wurden in die Fig. 3 nur die Bezugszeichen 26 und 28 eingetragen, da im Bereich des Schnitts 3-3 in jeder Außenlage nur noch eine einzige Sicke vorhanden ist.

Damit die Sicken ihre Abdichtfunktion erfüllen können, nämlich die Aufgabe, zu verhindern, daß Gase aus den Brennräumen zwischen den Metallblechlagen 20 und 24 bzw. 22 und 24 in radialer Richtung (bezüglich der Brennraumachsen) entweichen können, müssen die Sicken bei angezogenen Zylinderkopfschrauben und im Motorbetrieb nach wie vor in Richtung senkrecht zur Ebene der Dichtungsplatte 10 elastisch nachgeben können und federnd gegen die Mittellage 24 anliegen; dies setzt voraus, daß die Sicken durch senkrecht zur Ebene der Dichtungsplatte 10 orientierte Pressungskräfte nicht völlig flachgedrückt werden können. Um dies zu gewährleisten, wird jede Brennraum-Durchgangsöffnung von einem Distanzhalterring umfaßt, die Durchgangsöffnung 12 von einem Distanzhalterring 40, die Durchgangsöffnung 14 von einem Distanzhalterring 42. Diese Distanzhalterringe werden aus einem Metallblech hergestellt, dessen Dicke erfindungsgemäß nur einen Bruchteil der Dicke derjenigen Metallblechlage beträgt, an der der betreffende Distanzhalterring befestigt ist. Bei der dargestellten Ausführungsform sind die Distanzhalterringe an der Mittellage 24 befestigt, die Blechstärke der Distanzhalterringe beträgt aber vorteilhafterweise auch nur einen Bruchteil der Blechstärke der Außenlage 20 bzw. der Außenlage 22.

Um nun die Verformung sowohl der Sicken der Außenlage 20, als auch der Sicken der Außenlage 22 in der gewünschten Weise zu begrenzen, könnte man um jede Brennraum-Durchgangsöffnung herum auf jeder Seite der Mittellage 24 jeweils einen Distanzhalterring anbringen; um aber für jede Brennraum-Durchgangsöffnung mit einem einzigen Distanzhalterring auszukommen, ist die Mittellage 24 für jede Brennraum-Durchgangsöffnung mit einer die letztere ringförmig umgebenden Abkröpfung versehen, welche auf derjenigen Seite der Mittellage, an der die Distanzhalterringe angebracht sind, eine die betreffende Brennraum-Durchgangsöffnung mit radialem Abstand ringförmig umgebende Stufe 44 bildet, die in Richtung auf die Außenlage 22 vorspringt. Auf der anderen Seite der Mittellage 24 ergibt sich dadurch zu jeder Stufe 44 eine Stufe 46, welche zu einer entsprechenden Vertiefung führt. Wenn nun die Höhe der Stufen 44 geringer ist als die Blechstärke der Distanzhalterringe, verhindern die letzteren, daß die Sicken in der Außenlage 22 völlig flachgedrückt werden können. In analoger Weise verhindern diejenigen Bereiche der Mittellage 24, welche zwischen den Stufen 46 und den benachbarten Brennraum-Durchgangsöffnungen liegen, daß durch die erwähnten Pressungskräfte die Sicken der Außenlage 20 völlig flachgedrückt werden können.

Für den Abdichteffekt der Sicken ist es schließlich von Vorteil, wenn die beiden Seiten der Mittellage 24 und/oder die der letzteren zugewandten Seiten der Außenlagen 20 und 22 mit einem üblichen Dichtungsmaterial beschichtet werden.

In den Figuren 2, 3 und 4 sind nun diejenigen Schweißnähte 50 und 52 angedeutet, durch die die Distanzhalterringe 40 und 42 gasdicht mit (nicht beschichteten Bereichen) der Mittellage 24 verbunden wurden. Wie sich aus den vorstehenden Ausführungen ergibt, umgibt die Schweißnaht 50 die Brennraum-Durchgangsöffnung 12, die Schweißnaht 52 die Brennraum-Durchgangsöffnung 14, und zwar jeweils ungefähr kreisringförmig, wobei jede Schweißnaht in sich geschlossen und längs ihres Umfangs überall gleichförmig ist.

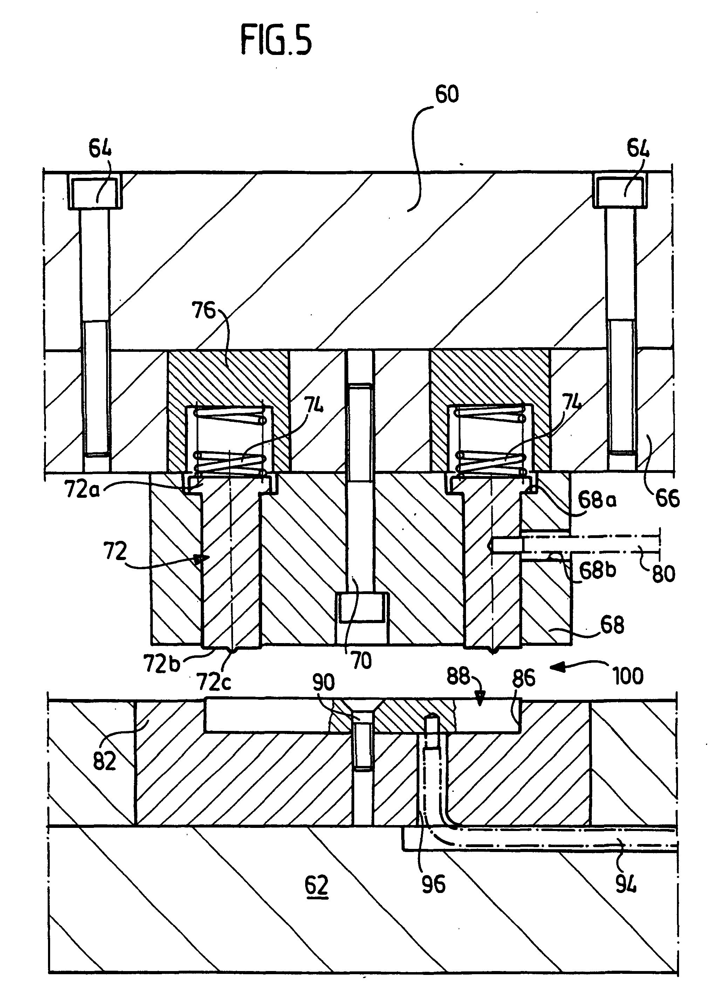

Die die Distanzhalterringe mit der Mittellage 24 verbindenden Schweißnähte werden durch Elektroimpulsschweißen mit Hilfe des in Fig. 5 dargestellten Werkzeugs erzeugt, wobei die Fig. 5 auch nur einen Teil eines Werkzeugs darstellen kann, mit dem alle Schweißnähte einer Zylinderkopfdichtung gleichzeitig und in einem Takt hergestellt werden.

Das in Fig. 5 dargestellte Werkzeug bzw. der dargestellte Werkzeugteil besitzt einen oberen und einen unteren Rahmen 60 bzw. 62; am oberen Rahmen 60 ist mittels Schrauben 64 eine Widerlagerplatte 66 befestigt, mit der ein Führungsblock 68 mittels Schrauben 70 verschraubt ist. In diesem aus einem elektrisch isolierenden Material bestehenden Führungsblock 68 ist eine als Ringelektrode 72 gestaltete erste Elektrode in gemäß Fig. 5 vertikaler Richtung verschiebbar geführt, auf welche Druckfedern 74 einwirken, die in einer ringförmigen oder mehreren topfförmigen Aufnahmen 76 aus elektrisch isolierendem Material angeordnet sind. Die Fig. 5 zeigt die unterste Position der Ringelektrode 72, welche durch einen Bund 72a der Ringelektrode und einen Anschlag 68a des Führungsblocks 68 definiert wird und in der die Ringelektrode aus dem Führungsblock 68 nach unten herausragt. An die untere Stirnfläche 72b der Ringelektrode 72 ist ein im Querschnitt schneiden- oder wulstartiger Kontaktvorsprung 72c angeformt, welcher in der Draufsicht auf die Stirnfläche 72b von unten einen in sich geschlossenen Ring bildet. Schließlich hat der Führungsblock 68 eine Durchgangsöffnung 68b, durch die ein zur Ringelektrode 72 führendes und an dieser befestigtes Anschlußkabel 80 hindurchgeführt ist, wobei der lichte Querschnitt der Durchgangsöffnung 68b diejenige Vertikalbewegung der Ringelektrode 72 und des Anschlußkabels 80 zuläßt, welche für die Durchführung des Schweißvorgangs erforderlich ist.

Auf dem unteren Rahmen 62 ist eine Elektrodenaufnahme 82 aus elektrisch isolierendem Material in nicht näher dargestellter Weise befestigt; die Elektrodenaufnahme hat eine Aussparung 86, welche eine plattenartige zweite Elektrode 88 aufnimmt, die mit der Elektrodenaufnahme 82 durch eine Schraube 90 fest verbunden ist. Die Elektrode 88 hat eine ebene, horizontal verlaufende Oberseite, ist in der Draufsicht vorzugsweise kreisscheibenförmig und hat einen Außendurchmesser, welcher etwas größer ist als der Durchmesser des kreisringförmigen Kontaktvorsprungs 72c. Ein zweites Anschlußkabel 94 ist durch eine Durchgangsöffnung 96 der Elektrodenaufnahme 82 hindurchgeführt und mit der Elektrode 88 fest verbunden.

Zwischen dem Führungsblock 68 bzw. der Ringelektrode 72 einerseits und der Elektrodenaufnahme 82 bzw. der Elektrode 88 andererseits bildet das Schweißwerkzeug einen horizontalen Spalt 100 zum Ein- und Hindurchschieben der miteinander zu verschweißenden bzw. miteinander verschweißten Blechteile.

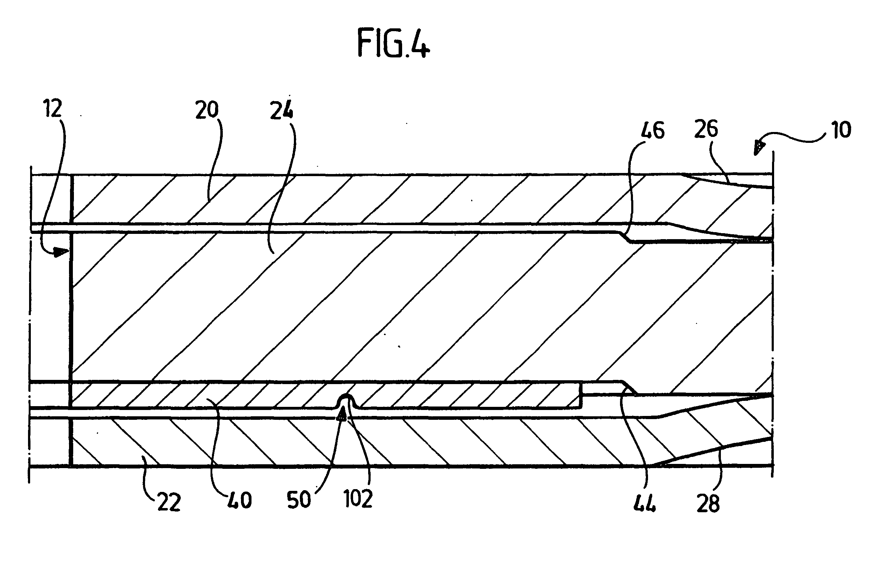

Zum Verschweißen z. B. des Distanzhalterrings 40 bzw. einer entsprechenden Metallblechscheibe mit der Mittellage 24 wird letztere mit oben auf der Mittellage aufliegendem Distanzhalterring bzw. aufliegender Metallblechscheibe in horizontaler Richtung so in den Spalt 100 des Schweißwerkzeugs eingeschoben, daß der Kontaktvorsprung 72c mittig über dem Distanzhalterring 40 bzw. der Metallblechscheibe liegt und die Mittellage 24 auf der Elektrode 88 aufliegt. Sodann werden die Mittellage und der Distanzhalterring bzw. die Metallblechscheibe durch Absenken des oberen Rahmens 60 zwischen dem Kontaktvorsprung 72c und der Elektrode 88 eingespannt, wobei die Einspannkraft durch die Druckfedern 74 erzeugt wird. In diesem Zustand wird ein Schweißstromimpuls durch die Elektroden 72 und 88, die Mittellage 24 und den Distanzhalterring 40 bzw. die Metallblechscheibe hindurchgeleitet, der zum Verschweißen der beiden Blechteile miteinander führt, wobei sich infolge der Einspannkraft im Distanzhalterring 40 bzw. der Metallblechscheibe eine rillenartige, kreisringförmige Vertiefung 102 ergibt, welche in Fig. 4 dargestellt ist und in ihrem Profil demjenigen des Kontaktvorsprungs 72c entspricht.

Nach dem Anheben des oberen Rahmens 60 lassen sich dann die miteinander verschweißten Blechteile dem Schweißwerkzeug entnehmen.

Impulsschweißgeneratoren zur Erzeugung der erforderlichen Schweißstromimpulse werden auf dem Markt angeboten, z. B. von der Firma RESISTRONIC AG, Biel, Schweiz unter der Modellbezeichnung 256.6-2 Hz.

Nur der Vollständigkeit halber sei noch folgendes erwähnt: Bei Wahl eines entsprechend hohen Schweißstroms genügt ein einziger Schweißstromimpuls, um einen Distanzhalterring mit der ihn tragenden Metallblechlage gasdicht zu verbinden. Die Ausbildung eines schneiden- oder wulstartigen Kontaktvorsprungs an einer der Elektroden hat zur Folge, daß der Schweißstrom auf einen schmalen Bereich von Distanzhalterring bzw. Metallblechscheibe einerseits und Metallblechlage andererseits konzentriert wird. Schließlich kann das Schweißwerkzeug Bestandteil eines Folgeverbundwerkzeugs sein, in dem mehrere Arbeitsvorgänge nacheinander durchgeführt werden, unter anderem auch das Ausstanzen des Distanzhalterrings bzw. einer Öffnung aus einer sodann den Distanzhalterring bildenden Metallblechscheibe.

Mit Hilfe des erfindungsgemäßen Verfahrens ergibt sich auf der freien Seite des Distanzhalterrings und/oder der diesen tragenden Metallblechlage eine ringförmige, rillenartige Vertiefung, welche dem schneiden- oder wulstartigen Kontaktvorsprung der Elektrode entspricht und infolgedessen überall glattwandig ist und einen in sich geschlossenen Ring bildet, der keine Stoßstelle und keinen Überlappungsbereich aufweist, in dem Endbereiche der rillenartigen Vertiefung (in der Draufsicht) nebeneinander verlaufen. Dies wäre anders, wenn die Schweißnaht mit Hilfe des bekannten Elektro-Rollenschweißens erzeugt werden würde, da das Rollenschweißen einer ringförmigen Schweißnaht mit verhältnismäßig kleinem Durchmesser zu Rattermarken oder ähnlichen Ungleichförmigkeiten führen würde, vor allem dann, wenn eine Rolle einen Umfang mit schneidenartigem Profil hat. In diesem Zusammenhang muß man sich vor Augen halten, daß die Brennraum-Durchgangsöffnungen von Zylinderkopfdichtungen meistens verhältnismäßig kleine Durchmesser haben, bei denen ein Rollenschweißen ohnehin problematisch, wenn nicht gar unmöglich wäre, ganz äbgesehen davon, daß das Rollenschweißen weit mehr Zeit benötigen würde als das mit Ringelektroden arbeitende erfindungsgemäße Verfahren.

## Patentansprüche

1. Verfahren zur Herstellung einer Zylinderkopfdichtung mit einer mehrere Metallblechlagen aufweisenden Dichtungsplatte, welche mindestens eine Brennraum-Durchgangsöffnung besitzt, wobei eine erste Metallblechlage mit einem ringförmigen, die Brennraum-Durchgangsöffnung umfassenden, in Richtung auf eine benachbarte, zweite Metallblechlage vorspringenden und bei eingebauter Zylinderkopfdichtung gegen die zweite Metallblechlage anliegenden, senkrecht zur Dichtungsplatte elastisch verformbaren, insbesondere als Sicke ausgebildeten Dichtelement versehen ist, und wobei zur Begrenzung der Verformung des Dichtelements dem letzteren radial benachbart auf einer der beiden Metallblechlagen ein der anderen Metallblechlage zugewandter, die Brennraum-Durchgangsöffnung umfassender und von den beiden Metallblechlagen überdeckter metallischer Distanzhalterring mittels einer ringförmigen Schweißnaht befestigt ist, **dadurch gekennzeichnet, daß** der Distanzhalterring (40) an der ihn tragenden Metallblechlage (24) durch eine kontinuierliche, ringförmige, gleichförmige und in sich geschlossene Schweißnaht (50) durch Elektroimpulsschweißen gasdicht befestigt wird, indem der Distanzhalterring und die ihn tragende Metallblechlage zwischen einer gegen den Distanzhalterring anliegenden ersten Elektrode (72) und einer gegen die tragende Metallblechlage (24) anliegenden zweiten Elektrode (88) eingespannt werden und sodann ein für das Verschweißen ausreichender Stromimpuls durch einen gegen eines der miteinander zu verschweißenden Teile (24, 40) gepreßten ringförmigen, schneiden- oder wulstartigen Kontaktvorsprung (72c) der einen Elektrode, die miteinander zu verschweißenden Teile und die andere Elektrode geleitet wird.

2. Verfahren nach Anspruch 1, **dadurch gekennzeichnet, daß** der Kontaktvorsprung (72c) gegen den Distanzhalterring (40) gepreßt wird.

3. Verfahren nach Anspruch 1 oder 2, **dadurch gekennzeichnet, daß** anstelle eines Distanzhalterrings eine Metallblechscheibe mit der Metallblechlage verschweißt und sodann zur Erzeugung des Distanzhalterrings aus der Scheibe eine Öffnung ausgestanzt wird.

4. Zylinderkopfdichtung mit einer mehrere Metallblechlagen aufweisenden Dichtungsplatte, welche mindestens eine Brennraum-Durchgangsöffnung besitzt, wobei eine erste Metallblechlage mit einem ringförmigen, die Brennraum-Durchgangsöffnung umfassenden, in Richtung auf eine benachbarte, zweite Metallblechlage vorspringenden und bei eingebauter Zylinderkopfdichtung gegen die zweite Metallblechlage anliegenden, senkrecht zur Dichtungsplatte elastisch verformbaren, insbesondere als Sicke ausgebildeten Dichtelement versehen ist, und wobei zur Begrenzung der Verformung des Dichtelements dem letzteren radial benachbart auf einer der beiden Metallblechlagen ein der anderen Metallblechlage zugewandter, die Brennraum-Durchgangsöffnung umfassender und von den beiden Metallblechlagen überdeckter metallischer Distanzhalterring mittels einer ringförmigen Schweißnaht befestigt ist, **dadurch gekennzeichnet, daß** der Distanzhalterring (40) an der ihn tragenden Metallblechlage (24) durch eine kontinuierliche, ringförmige, gleichförmige und in sich geschlossene Elektroschweißnaht (50) gasdicht befestigt ist, welche auf der freien Seite des Distanzhalterrings und/oder der ihn tragenden Metallblechlage (24) eine ringförmige, rillenartige Vertiefung (102) aufweist.

5. Zylinderkopfdichtung nach Anspruch 4, **dadurch gekennzeichnet, daß** die senkrecht zur Ebene der Dichtungsplatte (10) gemessene Dicke des Distanzhalterrings (40) nur einen Bruchteil der Dicke jeder der beiden Metallblechlagen (22, 24) beträgt.

6. Zylinderkopfdichtung nach Anspruch 4 oder 5, **dadurch gekennzeichnet, daß** die Dicke des Distanzhalterrings (40) ungefähr 0,1 bis 0,15 mm und diejenige der zweiten Metallblechlage (24) ungefähr 0,6 bis 1,1 mm, vorzugsweise ungefähr 0,85 bis 1,05 mm, beträgt.

7. Zylinderkopfdichtung nach einem oder mehreren der Ansprüche 4 bis 6, **dadurch gekennzeichnet, daß** der Distanzhalterring (40) ein weiteres, an die Brennraum-Durchgangsöffnung (12) unmittelbar angrenzendes Dichtelement bildet.

8. Zylinderkopfdichtung nach einem oder mehreren der Ansprüche 4 bis 7, **dadurch gekennzeichnet, daß** eine weitere äußere Metallblechlage (20) vorgesehen ist, zwischen welcher und der ersten Metallblechlage (22) die zweite Metallblechlage (24) angeordnet ist, daß letztere dem Distanzhalterring (40) radial benachbart um ein Maß abgekröpft ist, welches kleiner als die Dicke des Distanzhalterrings ist, und daß auch die weitere äußere Metallblechlage mit einem dem Dichtelement der ersten Metallblechlage entsprechenden Dichtelement (26) versehen ist.

9. Zylinderkopfdichtung nach einem oder mehreren der Ansprüche 4 bis 8, **dadurch gekennzeichnet, daß** die Elektroschweißnaht (50) nur auf der freien Seite des Distanzhalterrings (40) eine rillenartige Vertiefung (102) aufweist.

## Claims

1. Process for the manufacture of a cylinder head gasket with a gasket plate comprising several sheet metal layers and having at least one combustion chamber through-opening, a first sheet metal layer being provided with a ring-shaped sealing element surrounding the combustion chamber through-opening, projecting in the direction towards an adjacent, second sheet metal layer and resting against the second sheet metal layer when the cylinder head gasket is installed, said sealing element being, in particular, designed as a bead and being capable of undergoing elastic deformation perpendicularly to the gasket plate, and a metallic spacer ring covered by the two sheet metal layers being secured by a ring-shaped, welded seam to one of the two sheet metal layers radially adjacent to the sealing element for delimitation of the deformation of the sealing element, said spacer ring facing the other sheet metal layer and surrounding the combustion chamber through-opening, **characterized in that** the spacer ring (40) is secured in a gas-tight manner by electric pulse welding to the sheet metal layer (24) carrying it by a continuous, ring-shaped, welded seam (50) which is uniform and closed within itself by the spacer ring and the sheet metal layer carrying it being clamped between a first electrode (72) resting against the spacer ring and a second electrode (88) resting against the sheet metal layer (24) carrying the spacer ring, and a current pulse sufficient for the welding then being passed through a ring-shaped, sharp edge-like or bead-like contact projection (72c) of the one electrode pressed against one of the parts (24, 40) to be welded to each other, through the parts to be welded to each other and through the other electrode.

2. Process as defined in claim 1, **characterized in that** the contact projection (72c) is pressed against the spacer ring (40).

3. Process as defined in claim 1 or 2 , **characterized in that** instead of a spacer ring, a sheet metal disc is welded to the sheet metal layer, and an opening is then stamped out of the disc so as to produce the spacer ring.

4. Cylinder head gasket with a gasket plate comprising several sheet metal layers and having at least one combustion chamber through-opening, a first sheet metal layer being provided with a ring-shaped sealing element surrounding the combustion chamber through-opening, projecting in the direction towards an adjacent, second sheet metal layer and resting against the second sheet metal layer when the cylinder head gasket is installed, said sealing element being, in particular, designed as a bead and being capable of undergoing elastic deformation perpendicularly to the gasket plate, and a metallic spacer ring covered by the two sheet metal layers being secured by a ring-shaped, welded seam to one of the two sheet metal layers radially adjacent to the sealing element for delimitation of the deformation of the sealing element, said spacer ring facing the other sheet metal layer and surrounding the combustion chamber through-opening, **characterized in that** the spacer ring (40) is secured in a gas-tight manner to the sheet metal layer (24) carrying it by a continuous, ring-shaped, electrically welded seam (50) which is uniform and closed within itself and has on the free side of the spacer ring and/or the sheet metal layer (24) carrying it a ring-shaped, groove-like depression (102).

5. Cylinder head gasket as defined in claim 4, **characterized in that** the thickness of the spacer ring (40) measured perpendicularly to the plane of the gasket plate (10) is only a fraction of the thickness of each of the two sheet metal layers (22, 24).

6. Cylinder head gasket as defined in claim 4 or 5, **characterized in that** the thickness of the spacer ring (40) is approximately from 0.1 to 0.15 mm and the thickness of the second sheet metal layer (24) is approximately from 0.6 to 1.1 mm, preferably approximately from 0.85 to 1.05 mm.

7. Cylinder head gasket as defined in any one or several of claims 4 to 6, **characterized in that** the spacer ring (40) forms a further sealing element bordering directly on the combustion chamber through-opening (12).

8. Cylinder head gasket as defined in any one or several of claims 4 to 7, **characterized in that** a further outer sheet metal layer (20) is provided, and the second sheet metal layer (24) is arranged between this outer sheet metal layer and the first sheet metal layer (22), **in that** the second sheet metal layer is offset radially adjacent to the spacer ring (40) by an amount which is smaller than the thickness of the spacer ring, and **in that** the further outer sheet metal layer is also provided with a sealing element (26) corresponding to the sealing element of the first sheet metal layer.

9. Cylinder head gasket as defined in any one or several of claims 4 to 8, **characterized in that** the electrically welded seam (50) has a groove-like depression (102) only on the free side of the spacer ring (40).

## Revendications

1. Procédé de fabrication d'un joint de culasse avec une plaque d'étanchéité présentant une pluralité de couches en tôle métallique, comportant au moins une ouverture de traversée de chambre de combustion, une première couche de tôle métallique étant munie d'un élément d'étanchéité à forme annulaire, entourant l'ouverture de traversée de chambre de combustion, réalisé en particulier sous forme de moulure, déformable élastiquement en direction perpendiculaire à la plaque d'étanchéité, venant en appui contre la deuxième couche de tôle métallique et venant en appui lorsque le joint de culasse est monté, en faisant saillie en direction d'une deuxième couche de tôle métallique voisine, et où, pour limiter la déformation de l'élément d'étanchéité, au voisinage de ce dernier, radialement, sur l'une des deux couches en tôle métallique, est fixé, au moyen d'un cordon de soudage à forme annulaire, un anneau de maintien d'espacement métallique tourné vers l'autre couche de tôle métallique, entourant l'ouverture de traversée de chambre de combustion et recouvert par les deux couches de tôle métallique, **caractérisé en ce que**, sur la couche en tôle métallique (24) le portant, l'anneau de maintien d'espacement (40) est fixé de façon étanche aux gaz, par soudage par impulsions électriques, au moyen d'un cordon de soudage (50) continu en forme d'anneau régulier et fermé en soi, **en ce que** l'anneau de maintien d'espacement et la couche en tôle métallique le portant sont enserrés entre une première électrode (72), s'appliquant contre l'anneau de maintien d'espacement, et une deuxième électrode (88), s'appliquant contre la couche en tôle métallique (24) porteuse et, ensuite, une impulsion électrique, suffisante pour provoquer le soudage, est passée par une saillie de contact (72c) en forme d'anneau, de tranchant ou de bourrelet, pressée contre l'une des parties (24, 40) à souder ensemble, la saillie de contact (72c) appartenant à une électrode, l'impulsion électrique passant par les pièces à souder ensemble et par l'autre électrode.

2. Procédé selon la revendication 1, **caractérisé en ce que** la saillie de contact (72c) est pressée contre l'anneau de maintien d'espacement (40).

3. Procédé selon la revendication 1 ou 2, **caractérisé en ce que**, au lieu d'un anneau de maintien d'espacement, on soude une plaque en tôle métallique à la couche en tôle métallique et, ensuite, on découpe par estampage une ouverture, pour produire l'anneau de maintien d'espacement à partir de la plaque.

4. Joint de culasse comportant une plaque d'étanchéité présentant une pluralité de couches en tôle métallique, comportant au moins une ouverture de traversée de chambre de combustion, une première couche de tôle métallique étant munie d'un élément d'étanchéité à forme annulaire, entourant l'ouverture de traversée de chambre de combustion, réalisé en particulier sous forme de moulure, déformable élastiquement en direction perpendiculaire à la plaque d'étanchéité, venant en appui contre la deuxième couche de tôle métallique et venant en appui lorsque le joint de culasse est monté, en faisant saillie en direction d'une deuxième couche de tôle métallique voisine, et où, pour limiter la déformation de l'élément d'étanchéité, au voisinage de ce dernier, radialement, sur l'une des deux couches en tôle métallique, est fixé, au moyen d'un cordon de soudage à forme annulaire, un anneau de maintien d'espacement métallique tourné vers l'autre couche de tôle métallique, entourant l'ouverture de traversée de chambre de combustion et recouvert par les deux couches de tôle métallique, **caractérisé en ce que** l'anneau de maintien d'espacement (40) est fixé de façon étanche aux gaz à la couche en tôle métallique le portant, par un cordon de soudage électrique (50) continu en forme d'anneau, régulier et fermé en soi, cordon présentant, sur la face libre de l'anneau de maintien d'espacement et/ou la couche en tôle métallique (24) le portant, un creusement (102) du genre d'une cannelure, en forme d'anneau.

5. Joint de culasse selon la revendication 4, **caractérisé en ce que** l'épaisseur, mesurée perpendiculairement par rapport au plan de la plaque d'étanchéité (10), de l'anneau de maintien d'espacement (40) ne fait qu'une fraction de l'épaisseur de chacune des deux couches en tôle métallique (22, 24).

6. Joint de culasse selon la revendication 4 ou 5, **caractérisé en ce que** l'épaisseur de l'anneau de maintien d'espacement (40) est d'environ 0,1 à 0,15 mm et celle de la deuxième couche en tôle métallique (24) est d'environ 0,6 à 1,1 mm, de préférence d'environ 0,85 à 1,05 mm.

7. Joint de culasse selon l'une ou plusieurs des revendications 4 à 6, **caractérisé en ce que** l'anneau de maintien d'espacement (40) forme un élément d'étanchéité supplémentaire directement limitrophe à l'ouverture de traversée de chambre de combustion (12).

8. Joint de culasse selon l'une ou plusieurs des revendications 4 à 7, **caractérisé en ce qu'**une autre couche en tôle métallique (20) extérieure est prévue, entre laquelle et la première couche en tôle métallique (22) est disposée la deuxième couche en tôle métallique (24), **en ce que** cette dernière est coudée au voisinage radialement de l'anneau de maintien d'espacement (40), d'une valeur inférieure à l'épaisseur de l'anneau de maintien d'espacement, et **en ce qu'**également l'autre couche en tôle métallique extérieure est munie d'un élément d'étanchéité (26), correspondant à l'élément d'étanchéité de la première couche en tôle métallique.

9. Joint de culasse selon l'une ou plusieurs des revendications 4 à 8, **caractérisé en ce que** le cordon de soudage électrique (50) présente un creusement (102) du genre d'une cannelure, uniquement sur la face libre de l'anneau de maintien d'espacement (40).
